# EUROPÄISCHE PATENTSCHRIFT

(11) **EP 1 501 703 B1**
(45) Veröffentlichungstag und Bekanntmachung des Hinweises auf die Patenterteilung: **11.05.2016**
(21) Anmeldenummer: 02762255.4
(22) Anmeldetag: 23.08.2002
(51) Int. Cl.: B60R 11/02, B60R 13/02

(54) **ABDECKMODUL**
COVER MODULE
MODULE DE COUVERTURE

(30) Priorität: 29.04.2002 DE 20206741 U; 29.04.2002 DE 10219222; 29.04.2002 DE 10219220
(43) Veröffentlichungstag der Anmeldung: 02.02.2005
(73) Patentinhaber: Magna Mirrors Holding GmbH, 63877 Sailauf (DE)
(72) Erfinder: BERBERICH, Wolfgang, 97896 Freudenberg (DE); FUCHS, Hans-Joachim, 97904 Dorfprozelten (DE); MEYER, Wolfram, 97909 Stadtprozelten (DE); SEITZ, Edwin, 97909 Neuenbuch (DE)
(74) Vertreter: Völger, Silke Beatrix
(86) Internationale Anmeldenummer: PCT/DE2002/003137
(87) Internationale Veröffentlichungsnummer: WO 2003/093061

(56) Entgegenhaltungen:
- EP-A- 0 278 069
- EP-A- 0 304 198
- EP-A- 1 067 019
- EP-A- 1 087 464
- WO-A-01/49526
- DE-A- 4 329 983
- DE-A- 10 007 657
- DE-A- 19 850 371
- DE-A- 19 958 605
- DE-U- 29 606 475
- FR-A- 2 728 198
- US-A- 1 546 571
- US-A- 4 100 372
- US-A- 4 818 010
- US-A- 4 908 611
- US-A- 5 124 833
- US-A- 5 192 110
- US-A- 5 822 023
- US-A- 5 825 096
- US-A- 5 956 181
- US-A- 6 135 528
- US-A- 6 157 418
- US-A1- 2001 005 804
- US-A1- 2002 005 777
- US-A1- 2002 021 029
- US-B1- 6 324 450
- PATENT ABSTRACTS OF JAPAN vol. 013, no. 125 (P-847), 28. März 1989 (1989-03-28) & JP 63 295982 A (YUKIO MASUDA), 2. Dezember 1988 (1988-12-02)
- PATENT ABSTRACTS OF JAPAN vol. 008, no. 195 (M-323), 7. September 1984 (1984-09-07) & JP 59 084641 A (ICHIKO KOGYO KK), 16. Mai 1984 (1984-05-16)
- PATENT ABSTRACTS OF JAPAN vol. 011, no. 005 (P-533), 8. Januar 1987 (1987-01-08) & JP 61 182023 A (TOYODA GOSEI CO LTD), 14. August 1986 (1986-08-14)
- PATENT ABSTRACTS OF JAPAN vol. 008, no. 028 (M-274), 7. Februar 1984 (1984-02-07) & JP 58 185338 A (NISSAN JIDOSHA KK), 29. Oktober 1983 (1983-10-29)
- PATENT ABSTRACTS OF JAPAN vol. 2000, no. 11, 3. Januar 2001 (2001-01-03) & JP 2000 225892 A (MURAKAMI CORP), 15. August 2000 (2000-08-15)
- PATENT ABSTRACTS OF JAPAN vol. 018, no. 072 (M-1555), 7. Februar 1994 (1994-02-07) & JP 05 286393 A (TOKAI RIKA CO LTD), 2. November 1993 (1993-11-02)
- PATENT ABSTRACTS OF JAPAN vol. 008, no. 057 (M-283), 15. März 1984 (1984-03-15) & JP 58 209635 A (NISSAN JIDOSHA KK), 6. Dezember 1983 (1983-12-06)
- PATENT ABSTRACTS OF JAPAN vol. 2002, no. 05, 3. Mai 2002 (2002-05-03) & JP 2002 029255 A (NEOEX LAB INC), 29. Januar 2002 (2002-01-29)
- PATENT ABSTRACTS OF JAPAN vol. 2000, no. 04, 31. August 2000 (2000-08-31) & JP 2000 006854 A (NILES PARTS CO LTD), 11. Januar 2000 (2000-01-11)

## Beschreibung

Die Erfindung betrifft ein Abdeckmodul zur Anordnung auf der Dachinnenseite eines Fahrzeuges nach dem Oberbegriff des Anspruchs 1.

Gattungsgemäße Abdeckmodule werden im Fahrzeugbau dazu eingesetzt, die Blechkarosserie auf der Dachinnenseite des Fahrzeuges zum Innenraum hin abzudecken. Untechnisch werden derartige Abdeckmodule vielfach als "Dachhimmel" bezeichnet.

In modernen Fahrzeugen sind eine Vielzahl von Funktionselementen vorgesehen, die vom Fahrer bzw. den anderen Fahrzeuginsassen genutzt werden können. Um die Vielzahl von Funktionselementen im Fahrzeug unterbringen zu können, ist man dazu übergegangen, viele dieser Funktionselemente im Überkopfbereich anzuordnen. Bei der Montage des Fahrzeuges müssen diese Funktionselemente deshalb einzeln am Abdeckmodul befestigt werden.

Aufgrund der Anordnung gattungsgemäßer Abdeckmodule auf der Dachinnenseite, d.h. im Überkopfbereich des Montagepersonals, ist die Montage von Funktionselementen an den Abdeckmodulen zeitaufwendig und belastend.

Aus der EP 1 067 019 A ist ein Abdeckmodul bekannt. Das Abdeckmodul deckt die Dachinnenseite im Bereich der Blechkarosserie teilweise ab. Weiterhin ist zumindest eine Beleuchtungseinrichtung im Bereich über den Köpfen der Fahrzeuginsassen im Abdeckmodul fertig montiert. Zusätzlich weist das Abdeckmodul eine Ausnehmung im Bereich vor der Windschutzscheibe auf, in der eine Rückblickeinrichtung angeordnet ist, mit der der Fahrer den nachfolgenden Verkehr beobachten kann.

Ausgehend von dem Stand der Technik ist es deshalb Aufgabe der vorliegenden Erfindung ein Abdeckmodul vorzuschlagen, durch das die Fertigmontage der Fahrzeuge vereinfacht wird.

Diese Aufgabe wird durch ein Abdeckmodul nach der Lehre des Anspruchs 1 gelöst.

Vorteilhafte Ausführungsformen der Erfindung sind Gegenstand der Unteransprüche.

Erfindungsgemäß sind an dem Abdeckmodul bereits alle im Bereich über dem Kopf der Fahrzeuginsassen im Fahrzeug vorzusehenden Funktionselemente fertig vormontiert. Die Vormontage der Funktionselemente kann dabei in einer montagegünstigen Position durchgeführt werden, da das Abdeckmodul vor der Endmontage frei handhabbar ist. Zur Endmontage wird das Abdeckmodul mit den vormontierten Funktionselementen dann im Bereich der Dachinnenseite des Fahrzeuges befestigt, wobei die Befestigung von zusätzlichen Funktionselementen am Abdeckmodul entfällt. Im Ergebnis kann dadurch bei der Endmontage der Fahrzeuge viel Montagezeit eingespart werden und zudem die Belastung für das Montagepersonal verringert werden.

Erfindungsgemäß ist am Abdeckmodul zumindest ein Kontaktierungselement, beispielsweise eine Steckerleiste, vorgesehen. Dieses Kontaktierungselement dient der elektrischen bzw. elektronischen Kontaktierung mehrerer am Abdeckmodul vorgesehener Funktionselemente. Sind beispielsweise alle Funktionselemente des Abdeckmoduls über das Kontaktierungselement kontaktierbar, so reicht es bei der Endmontage des Fahrzeuges aus, dieses eine Kontaktierungselement mit dem Bordnetz zu kontaktieren, um das gesamte Abdeckmodul funktionstauglich zu machen. Als Versorgungsspannung sind neben den üblichen 12 Volt auch 42 Volt denkbar. Außerdem kann über das Kontaktierungselement auch eine Datenverbindung zum Datenbus (LAN, CAN, LIN) des Fahrzeugs geschaffen werden.

Besonders vorteilhaft ist es, wenn das Abdeckmodul mit einer einfachen Fügebewegung auf der Dachinnenseite verrastet oder eingeclipst werden kann. Durch diese Art der Befestigung kann die Montagezeit bei der Endmontage des Fahrzeuges weiter verkürzt werden.

Die am Abdeckmodul vorgesehenen Kontaktierungselemente sollten dabei derart gestaltet und angeordnet sein, dass sie ohne zusätzlichen Montageaufwand durch Befestigung des Abdeckmoduls auf der Dachinnenseite mit den funktionskomplementär ausgebildeten Kontaktierungselementen kontaktiert werden können. Im Ergebnis kann dadurch ein Montagehandgriff, nämlich die separate Montage der Kontaktierungselemente entfallen. Die Kontaktierung der Kontaktierungselemente wird vielmehr allein dadurch bewirkt, dass das Abdeckmodul zur richtigen Stelle an der Dachinnenseite bewegt und dort befestigt wird.

Welche Gestalt das Abdeckmodul selbst aufweist, ist grundsätzlich beliebig und kann auf die Eigenart des jeweiligen Fahrzeuges abgestimmt werden. Besondere Vorteile bieten erfindungsgemäße Abdeckmodule jedoch, wenn sie nicht die gesamte Fläche an der Dachinnenseite abdecken müssen. Nach einer bevorzugten Ausführungsform der Erfindung weist das Abdeckmodul deshalb großflächige Aussparungen und/oder Einbuchtungen auf, in denen transparente Bauteile, insbesondere Glasplatten, angeordnet werden und einen Teil des Fahrzeugdaches bilden. Die transparenten Bauteile werden dabei selbstverständlich an der Fahrzeugkarosserie befestigt und gelagert, um eine ausreichende Stabilität des Fahrzeugdaches zu gewährleisten. Im Ergebnis kann durch diese Gestaltung erreicht werden, dass die Abdeckmodule relativ kompakte Bauteile darstellen, deren Eigengewicht nicht zu hoch ist und die auch aufgrund ihrer relativ geringen Größe gut handhabbar sind. Aufgrund der erfindungsgemäßen Vormontage der erforderlichen Funktionselemente können derartige Abdeckmodule dann in einer einfachen "Plugand Play"-Fügebewegung am Fahrzeug befestigt werden.

Wie viele Abdeckmodule zur Abdeckung der Dachinnenseite insgesamt erforderlich sind, ist grundsätzlich beliebig. So ist es insbesondere denkbar, dass das Abdeckmodul mehrstückig ausgebildet ist, wobei dann der eine Teil des Abdeckmoduls zur Front des Fahrzeug weisend und der andere Teil des Abdeckmoduls zum Heck der Fahrzeug weisend montiert werden kann. Diese Bauweise hat insbesondere den Vorteil, dass die jeweiligen Abdeckmodule von vorne bzw. von hinten durch die Windschutzscheibe bzw. durch die Heckscheibe hindurch gehandhabt werden können.

Die Art und Gestaltung der am erfindungsgemäßen Abdeckmodul vormontierten Funktionselemente ist grundsätzlich beliebig. Es sind somit eine große Anzahl von Funktionselementen denkbar, die an erfindungsgemäßen Abdeckmodulen vormontiert sein können.

Weiter erfindungsgemäß wird der Innenrückspiegel des Fahrzeuges in das Abdeckmodul integriert. Dazu wird am Abdeckmodul im Bereich vor der Windschutzscheide eine Ausnehmung vorgesehen, in der eine Rückblickeinrichtung angeordnet ist, mit der der Fahrer den nachfolgenden Verkehr beobachten kann. Die Ausnehmung ist dabei derart anzuordnen und zu gestalten, dass der Fahrer nach Anordnung der Rückblickeinrichtung in der Ausnehmung den nachfolgenden Verkehr mit ausreichendem Sichtfeld einsehen kann. Durch die Integration der Rückblickeinrichtung in das Abdeckmodul kann die separate Montage eines Innenrückspiegels entfallen. Ein besonderer Vorteil ist es, dass der Bereich zwischen den beiden seitlichen Sonnenwänden am oberen Rand der Frontscheibe durch das Abdeckmodul abgedeckt wird, so dass separate Abschatteinrichtungen, beispielsweise eine mittlere Sonnenblende, entfallen können.

In der einfachsten Ausführungsform ist die Rückblickeinrichtung in der Art eines Spiegelelements ausgebildet, das in entsprechender Bauweise auch bei konventionellen Innenrückspiegeln Verwendung findet.

Besondere Vorteile bietet diese Anordnung eines Spiegelelements an einem erfindungsgemäßen Abdeckmodul, wenn eine ferngesteuerte Verstellung des Spiegelelements gewünscht wird. Denn in dem von dem Abdeckmodul gebildeten Hohlraum kann in einfacher Weise ein geeigneter Antrieb zur Verstellung des Blickwinkels des Spiegelelements eingebaut werden. Als Verstelleinrichtungen kommen dabei insbesondere auch Verstellantriebe in Frage, wie sie zur Verstellung des Spiegelelements in Außenrückspiegeln Verwendung finden.

Ist am Spiegelelement ein Verstellantrieb vorgesehen, so ist es dadurch möglich, für die Einstellung des Spiegelelements eine Memory-Funktion vorzusehen. Das heißt mit anderen Worten, dass nach Auswahl durch den Fahrer neben anderen Einstellungen, beispielsweise der Sitzeinstellung und der Einstellung der Außenrückspiegel, auch die Einstellung des Spiegelelements im Innenraum entsprechend einer für den jeweiligen Fahrer gespeicherten Position automatisch erfolgt.

Das Spiegelelement kann in der Art eines Prismenglases mit zwei Reflexionsflächen ausgebildet sein, wobei es dabei dann insbesondere möglich ist, das Spiegelelement durch ferngesteuerten Antrieb des Prismenglases abzublenden.

Alternativ zum Abblenden durch Verstellen eines Prismenglases kann am Spiegelelement auch ein elektrochromatisches Abblendsystem vorgesehen sein, dessen Transmissionseigenschaften durch entsprechende elektrische bzw. elektronische Ansteuerung verändert werden können.

Alternativ zur Verwendung eines konventionellen Spiegelelements als Rückblickeinrichtung kann in der Ausnehmung des Abdeckmoduls auch ein elektronisches Display eingebaut werden. Dieses Display ist dann mit einer geeigneten am Fahrzeug angeordneten Kamera zu verbinden, so dass die von der Kamera aufgenommenen Bilddaten mittels des Displays im Fahrzeuginnenraum angezeigt werden können.

Alternativ zur Verwendung von Spiegelelementen oder Displays als Rückblickeinrichtungen können auch Projektionseinrichtungen verwendet werden, die die Bilddaten eines Kamerasystems auf eine Projektionsfläche projizieren, wo diese reflektiert und vom Fahrer aufgenommen werden können. Denn Untersuchungen bei Verwendung von elektronischen Displays als Rückblickeinrichtungen haben gezeigt, dass das Auge des Fahrers beim Blick ins Display eine Umfokussierung vornehmen muss, für die eine gewisse Reaktionszeit erforderlich ist. Dieser Effekt kann durch die Verwendung von Projektionseinrichtungen mit Projektionsflächen vermieden werden.

Nach einer bevorzugten Ausführungsform ist nicht nur die Projektionsfläche in das Abdeckmodul integriert, sondern auch die Projektionseinrichtung. Wenn sowohl Projektionseinrichtung und Projektionsfläche in das Abdeckmodul integriert sind, kann dadurch erreicht werden, dass die Justierung der Projektionseinrichtung auf die Projektionsfläche bereits während der Vormontage vorgenommen werden kann. Bei der Endmontage des Fahrzeuges wird dann das justierte Projektionssystem zusammen mit dem Abdeckmodul montiert und eine weitere Justierung entfällt.

Bei bekannten Fahrzeugen werden die zum Sonnenschutz erforderlichen Sonnenblenden als separate Teile an der Dachinnenseite im Bereich der oberen Kante der Windschutzscheibe montiert. Diese Montage der Sonnenblenden stellt einen zusätzlichen Aufwand bei der Fahrzeugmontage dar. Zur weiteren Funktionsintegration wird deshalb vorgeschlagen, am erfindungsgemäßen Abdeckmodul eine linke und/oder rechte Sonnenblende verstellbar zu lagern. Im Ergebnis können dadurch auch die Sonnenblenden bereits am Abdeckmodul vormontiert und vorjustiert werden und die Montage der Sonnenblenden bei der Endmontage des Fahrzeuges entfällt. In welcher Art die Sonnenblenden zwischen ihrer Ruhestellung und der Sonnenschutzstellung verstellt werden, ist grundsätzlich beliebig. Beispielsweise ist es denkbar, dass die Sonnenblenden in der bekannten Weise zwischen Ruhestellung und Sonnenschutzstellung rotatorisch verschwenkt werden. Dazu können die Sonnenblenden beispielsweise in der Art von plattenförmigen Bauteilen ausgebildet sein, die mittels entsprechender Achsen seitlich an dem Abdeckmodul gelagert sind.

Alternativ zu dieser Bauweise ist es auch möglich neue Gestaltungen für Sonnenblenden zu realisieren. Insbesondere ist es bei Verwendung erfindungsgemäßer Abdeckmodule denkbar, dass die Sonnenblenden zwischen Ruhestellung und Sonnenschutzstellung linear aus- und eingefahren werden, da der vom Abdeckmodul gebildete Hohlraum die Sonnenblenden in der Ruhestellung aufnehmen kann. Zur Realisierung derartiger Bauformen ist es beispielsweise möglich, dass die Sonnenblenden in der Art von ausziehbaren Rolljalousien ausgebildet sind. Dadurch ist es insbesondere auch möglich die Sonnenblenden je nach Bedarf nur stückweise auszufahren.

Durch den von dem Abdeckmodul gebildeten Hohlraum ist es weiterhin möglich zur Verstellung der Sonnenblenden eine Antriebseinrichtung, beispielsweise entsprechend geeignete Elektromotoren vorzusehen. Der Fahrer muss dann zur Verstellung der Sonnenblenden keine Handverstellung mehr vornehmen, sondern es ist eine ferngesteuerte Verstellung der Sonnenblenden realisierbar. Insbesondere ist es auch denkbar die Sonnenblenden automatisch in Abhängigkeit bestimmter äußerer Bedingungen, beispielsweise eines bestimmten Lichteinfalls, automatisch zu verstellen.

Zusätzlich können an den Sonnenblenden auch noch verstellbar gelagerte Zusatzblenden vorgesehen sein. Durch Ausschwenken bzw. Ausziehen dieser Zusatzblenden kann die Abschattwirkung der Sonnenblenden bedarfsweise noch vergrößert werden. Dies ist insbesondere dann von Vorteil, wenn der Fahrer gegen den Lichteinfall der tiefstehenden Sonne geschützt werden soll.

Neben der Integration einer Rückblickeinrichtung und/oder der Sonnenblenden ist am erfindungsgemäßen Abdeckmodul ein optischer und/oder akustischer Sensor vorgesehen, mit dem Videodaten und/oder Audiodaten in der Fahrgastzelle erfassbar sind. Durch die Erfassung dieser Video- bzw. Audiodaten kann das Geschehen in der Fahrgastzelle aufgenommen und dokumentiert werden, so dass beispielsweise bei Unfällen die Rekonstruktion entsprechender Unfallursachen ermöglicht wird.

In welcher Art der optische Sensor ausgebildet ist, ist prinzipiell gleichgültig. Besonders geeignet sind Videokameras, insbesondere digitale Videokameras mit CCD-Chip, da diese Geräte zum einen preisgünstig verfügbar sind und zum anderen eine gute Aufzeichnungsqualität der Bilddaten erlauben.

Um möglichst große Bereiche in der Fahrgastzelle mit einem optischen Sensor aufnehmen zu können, ist es besonders vorteilhaft, wenn am optischen Sensor ein Weitwinkelobjektiv, vorzugsweise ein Objektiv mit "Fish-Eye"-Charakteristik, vorgesehen ist.

An welcher Stelle der Fahrgastzelle der optische bzw. akustische Sensor angeordnet ist, ist für die Verwirklichung eines erfindungsgemäßen Datenaufzeichnungssystems im Prinzip ohne Belang. Häufig werden jedoch Unfälle durch ein bestimmtes Fehlverhalten des Fahrers verursacht. Dieses Fehlverhalten kann beispielsweise darin liegen, dass einem übermüdeten Fahrer bei einem sogenannten "Sekundenschlaf" die Augen zufallen. Auch wenden manche Fahrer für zu lange Zeit ihre Aufmerksamkeit den Mitfahrern bzw. dem Autoradio zu, so dass eine ausreichend aufmerksame Beobachtung des Verkehrs in dieser Zeit nicht möglich ist. Weiter kann es bei Fahrern mit besonderen gesundheitlichen Einschränkungen, beispielsweise Personen mit Diabeteserkrankung oder Trägern von Herzschrittmachern, zu zeitweisen Ausfällen im Auffassungsvermögen kommen. Um derartige Ursachen für Unfalle erfassen zu können, ist es besonders vorteilhaft, wenn das Gesichtsfeld des Fahrers mit dem optischen Sensor aufgenommen wird. Derartige Bilddaten können dann insbesondere auch zur Entschuldung bzw. Entlastung des Fahrers dienen.

Ebenfalls vorteilhaft ist es, wenn mit dem optischen Sensor Personen auf der Rücksitzbank, beispielsweise Kinder, aufgenommen werden können. Dadurch kann das Verhalten der Mitfahrer auf der Rücksitzbank dokumentiert werden, so dass auch im Nachhinein feststellbar ist, ob dieses Verhalten Ursache eines Unfalles gewesen ist. Außerdem ist es durch die Beobachtung der Rücksitzbank möglich, die aktuellen Bilddaten an einer Anzeigevorrichtung, beispielsweise einem Bildschirm, dem Fahrer anzuzeigen. Dadurch kann der Fahrer das Geschehen im rückwärtigen Teil des Fahrzeuges beobachten, ohne den Kopf zu wenden.

Weiterhin vorteilhaft ist es, wenn der optische Sensor zur Ansteuerung einer Kindersitzerkennung geeignet ist. Durch derartige Systeme wird es dann möglich, zu erkennen, ob und an welcher Stelle ein Kindersitz befestigt wurde. Mit diesen Daten kann beispielsweise das Airbag-System in dem Fahrzeug angesteuert werden, so dass bei Befestigung eines Kindersitzes die entsprechenden Airbags im Falle eines Unfalles nicht ausgelöst werden.

Prinzipiell ist es denkbar, die erfassten Daten permanent zwischenzuspeichern. Dabei fallen allerdings im Laufe der Zeit riesige Datenmengen an, so dass zur Reduzierung der Datenmengen eine zumindest teilweise Löschung der Daten erforderlich ist. Es ist deshalb besonders vorteilhaft, wenn die Daten in einer Speichereinheit roulierend zwischengespeichert und gelöscht werden. Beispielsweise ist es dadurch möglich, immer die Daten der jeweils letzten 5 bis 60 Sekunden in der Speichereinheit zwischenzuspeichern. Alle Daten, die hinter diesem Zeithorizont liegen, werden jeweils gelöscht, da davon auszugehen ist, dass entsprechende Ereignisse in der Fahrgastzelle nicht mehr Ursache eines Unfalls gewesen sein können. Durch die roulierende Datenspeicherung wird erreicht, dass immer nur eine relativ kleine Datenmenge zwischengespeichert werden muss. Derartige Datenmengen können heute bereits in entsprechend geeigneten elektronischen Speicherbausteinen auf elektronischer Basis zwischengespeichert werden.

Alternativ zur roulierenden Datenspeicherung ist es auch denkbar, die Datenaufzeichnung blockartig alle 60 Sekunden auf einen externen Datenträger, beispielsweise eine beschreibbare CD-Rom, aufzuzeichnen.

Neben der Integration von Rückblickeinrichtungen, Sonnenblenden und/oder Datenerfassungssensoren ist es weiterhin denkbar am erfindungsgemäßen Abdeckmodul ein Antennenträgerelement vorzumontieren. Bei derartigen Ausführungsformen ist dann am Dach des Fahrzeugs eine Ausnehmung vorzusehen in der das Antennenträgerelement aufgenommen werden kann.

Erfindungsgemäß schließt die Oberfläche des Antennenträgerelements im Wesentlichen bündig mit der Oberfläche des Fahrzeugdachs ab. Weiterhin ist an der der Oberfläche des Antennenträgerelements gegenüberliegenden Unterseite des Antennenträgerelements eine Antenne direkt oder indirekt angeordnet. Primär handelt es sich bei dieser Antenne um eine GPS-Antenne; in diesem Fall kann diese mit einer Telematik-Steuereinheit (Steuereinheit zum Betreiben des GPS-Systems) integral verbunden sein und somit komplett auf dem Abdeckmodul vormontiert werden. Bei der Antenne kann es sich alternativ dazu auch um eine Radio-Antenne oder um eine Funk-Antenne handeln. Die Antenne kann in allen Fällen mit dem Antennenträgerelement integral verbunden sein. Eine bevorzugte Ausgestaltung ist im letztgenannten Fall dadurch gekennzeichnet, dass die Antenne vom Material des Antennenträgerelements umspritzt ist.

Primär kann durch ein derartiges Antennenträgersystem eine GPS-Antenne optimal im Fahrzeug untergebracht werden.

Welche Gestalt die Antenne selbst aufweist, ist grundsätzlich beliebig. Nach einer bevorzugten Ausführungsform ist die Antenne in der Art einer Ringkörperantenne ausgebildet, die bei entsprechend kompakter Bauweise zugleich einen sehr guten Funkempfang gewährleistet.

Soweit die Antenne selbst nicht über das Antennenträgerelement hinaussteht, sondern unterhalb des Antennenträgerelements angeordnet ist, muss das Antennenträgerelement aus einem für elektromagnetische Wellen durchlässigen Material, beispielsweise Kunststoff oder Glas, hergestellt sein.

Neben der Integration einer Rückblickeinrichtung, von Sonnenblenden, Datenaufzeichnungssensoren und/oder Antennenmodulen ist es weiterhin denkbar eine Vielzahl anderer Funktionselemente, beispielsweise Beleuchtungseinrichtungen (Innenbeleuchtung, Leseleuchten, Konsolenbeleuchtung), Funkempfänger, Lautsprecher, Diebstahlwarnanlagen, Multifunktionsanzeigen, Schiebedachsteuerungen, Videodisplays oder Abstandssensoren am erfindungsgemäßen Abdeckmodul vorzumontieren.

Verschiedene Ausführungsformen der Erfindung sind in den Zeichnungen dargestellt und werden nachfolgend beispielhaft erläutert.

Es zeigen:
- **Fig. 1**: ein schematisch dargestelltes Fahrzeug mit Fahrzeugdach in Ansicht von oben;
- **Fig. 2**: das Fahrzeug gemäß **Fig. 1** mit einem erfindungsgemäßen Abdeckmodul in perspektivischer Innenansicht;
- **Fig. 3**: eine zweite Ausführungsform eines erfindungsgemäßen Abdeckmoduls in Ansicht von vorne;
- **Fig. 4**: eine dritte Ausführungsform eines erfindungsgemäßen Abdeckmoduls in einem Teilquerschnitt;
- **Fig. 5**: eine vierte Ausführungsform eines erfindungsgemäßen Abdeckmoduls in einem Teilquerschnitt;
- **Fig. 6**: eine fünfte Ausführungsform eines erfindungsgemäßen Abdeckmoduls in einem Teilquerschnitt;
- **Fig. 7**: eine sechste Ausführungsform eines erfindungsgemäßen Abdeckmoduls im Querschnitt.

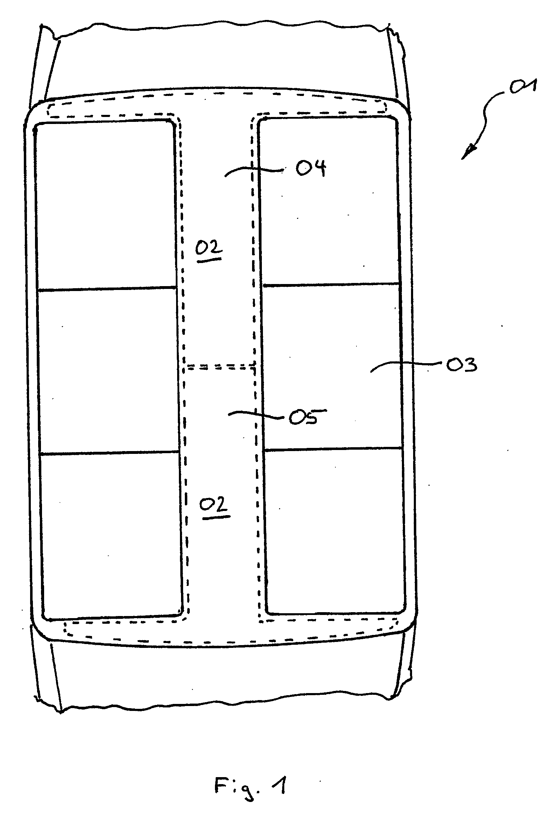

In **Fig. 1** ist ein Fahrzeugdach 01 eines schematisch dargestellten Fahrzeuges in Ansicht von oben dargestellt. Das Fahrzeugdach 01 wird von der Blechkarosserie 02 zusammen mit sechs Glasplatten 03 gebildet. Dazu sind in die Blechkarosserie an den Fahrzeugseiten Ausnehmungen vorgesehen, in die die Glasplatten 03 eingesetzt sind. Auf der Dachinnenseite des Fahrzeugdaches 01 sind zur Abdeckung der Blechkarosserie 03 zwei Abdeckmodule 04 und 05 befestigt, die in **Fig. 1** strichliniert angedeutet sind.

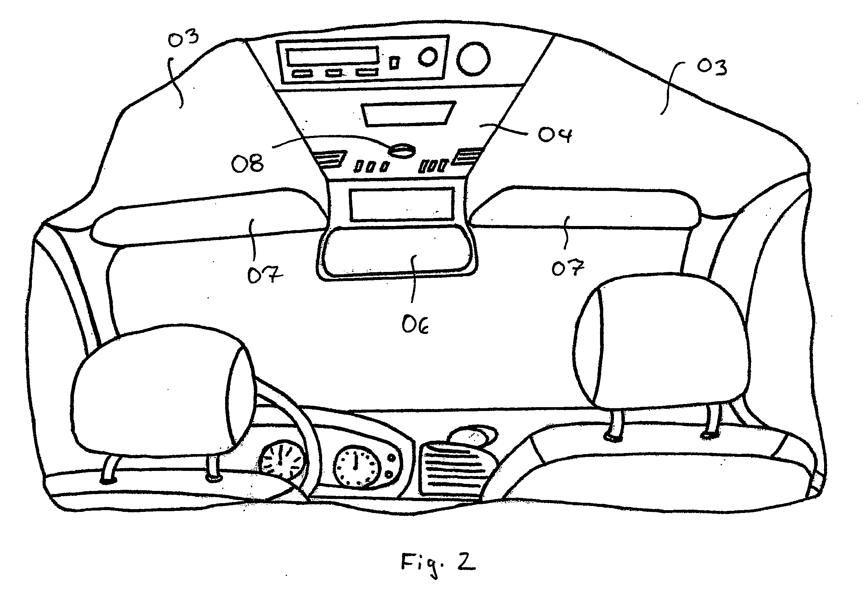

Das vordere Abdeckmodul 04 ist in **Fig. 2** in perspektivischer Innenansicht dargestellt. Am Abdeckmodul 04 sind verschiedenste Funktionselemente, insbesondere eine Rückblickeinrichtung 06, zwei Sonnenblenden 07 und ein optischer Sensor 08, vorgesehen. Alle diese Funktionselemente wurden am Abdeckmodul 04 vormontiert und zusammen mit dem Abdeckmodul 04 während der Endmontage des Fahrzeuges an der Fahrzeuginnenseite befestigt.

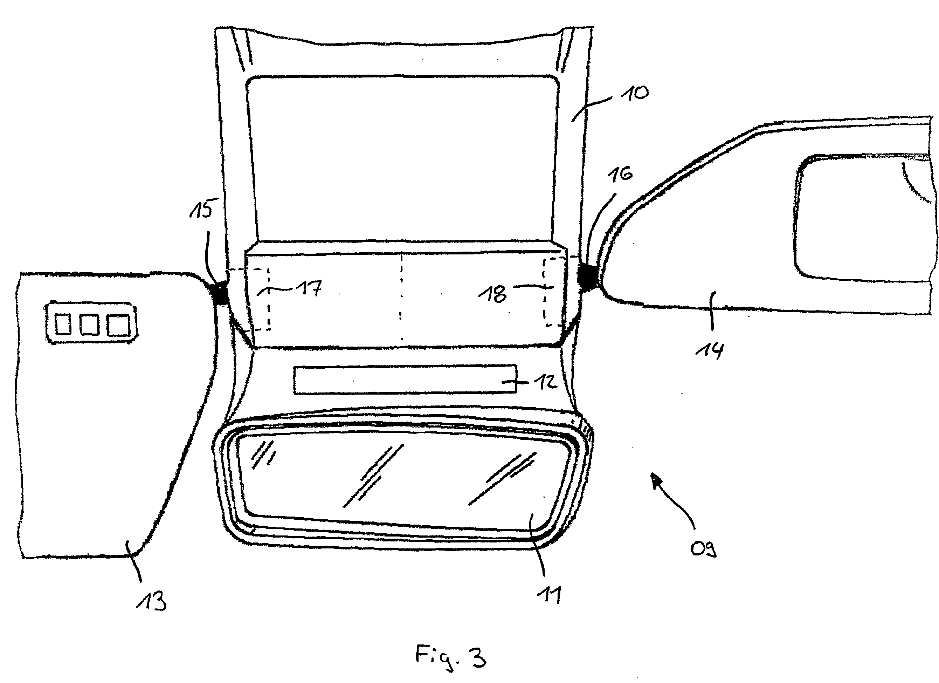

In **Fig. 3** ist eine zweite Ausführungsform 09 eines erfindungsgemäßen Abdeckmoduls schematisch dargestellt. Das Abdeckmodul 09 weist einen Hauptkörper 10 auf, an dem verschiedenste Funktionselemente, insbesondere eine elektrisch verstellbare Rückblickeinrichtung 11 und ein Display 12 zur Anzeige weiterer Fahrzeugdaten, integriert sind. Seitlich des Hauptkörpers 10 sind zwei Sonnenblenden 13 und 14 für den Fahrer und den Beifahrer vorgesehen. Die Sonnenblenden 13 und 14 sind jeweils mittels einer Verbindungswelle 15 bzw. 16 mit dem Hauptkörper 10 verbunden und können getrennt voneinander mittels innerhalb des Abdeckmoduls 09 angeordneter elektrischer Antriebsmotoren 17 bzw. 18, die in **Fig. 3** lediglich strichliniert angedeutet sind, rotatorisch verschwenkt werden.

**Fig**. **4** stellt eine dritte Ausführungsform 19 eines erfindungsgemäßen Abdeckmoduls im Querschnitt dar, das auf der Dachinnenseite eines Fahrzeuges 20 angeordnet ist. Auf dem Abdeckmodul 19 vormontiert ist ein Datenaufzeichnungssystem 21, das im Wesentlichen aus einem in der Art einer CCD-Videokamera ausgebildeten optischen Sensor 22, einem akustischen Sensor 23 und einer elektronischen Speichereinheit 24 besteht. Der optische Sensor 22 und der akustische Sensor 23 durchgreifen das Abdeckmodul 19 nach unten hin, so dass Video- bzw. Audiodaten aus der Fahrgastzelle 25 erfasst werden können. Vor dem optischen Sensor 22 ist dabei ein Weitwinkelobjektiv 26, beispielsweise mit einer "Fish-Eye"-Charakteristik, angeordnet, um ein möglichst großes Blickfeld in der Fahrgastzelle 25 beobachten zu können. Der akustische Sensor 23 wird durch eine gelochte Schutzblende 27 nach außen hin abgedeckt. Optischer Sensor 22 und akustischer Sensor 23 sind über Signalleitungen mit der Speichereinheit 24 verbunden, so dass die in der Fahrgastzelle 07 erfassten Video- und Audiodaten in der Speichereinheit 24 zwischengespeichert werden können. Weiter ist die Speichereinheit 24 mit der nicht dargestellten Airbag-Steuerung des Fahrzeuges 20 verbunden. Sobald die Airbags des Fahrzeuges 20 ausgelöst werden, wird dies in der Speichereinheit 24 registriert und die während der letzten 60 Sekunden erfassten Audio- und Videodaten gesichert.

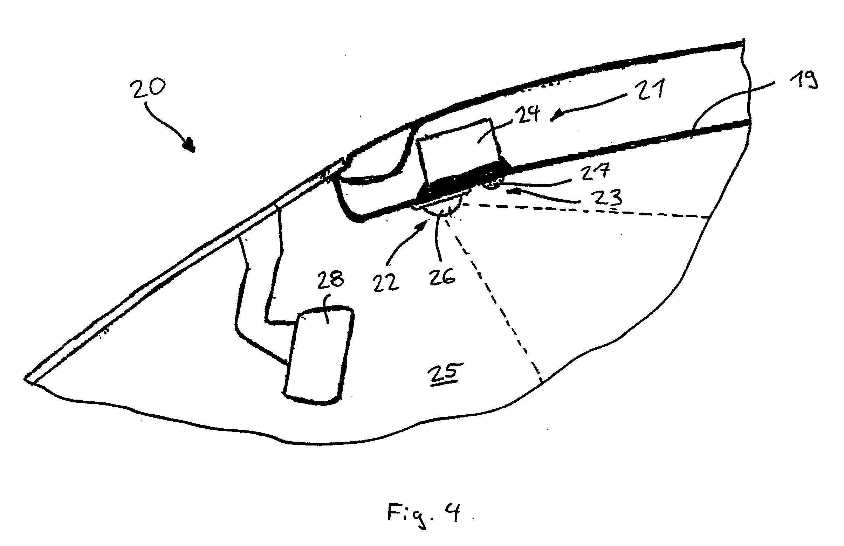

Durch die Anordnung des optischen Sensors 22 an der Vorderkante des Abdeckmoduls 19 können sowohl das Gesichtsfeld des Fahrers als auch Personen auf der Rücksitzbank beobachtet werden. Bei der in **Fig. 4** dargestellten Ausführungsform 19 des erfindungsgemäßen Abdeckmoduls ist der Innenrückspiegel 28 nicht in das Abdeckmodul 19 integriert, sondern wird als separates Bauteil im Fahrzeug 20 befestigt.

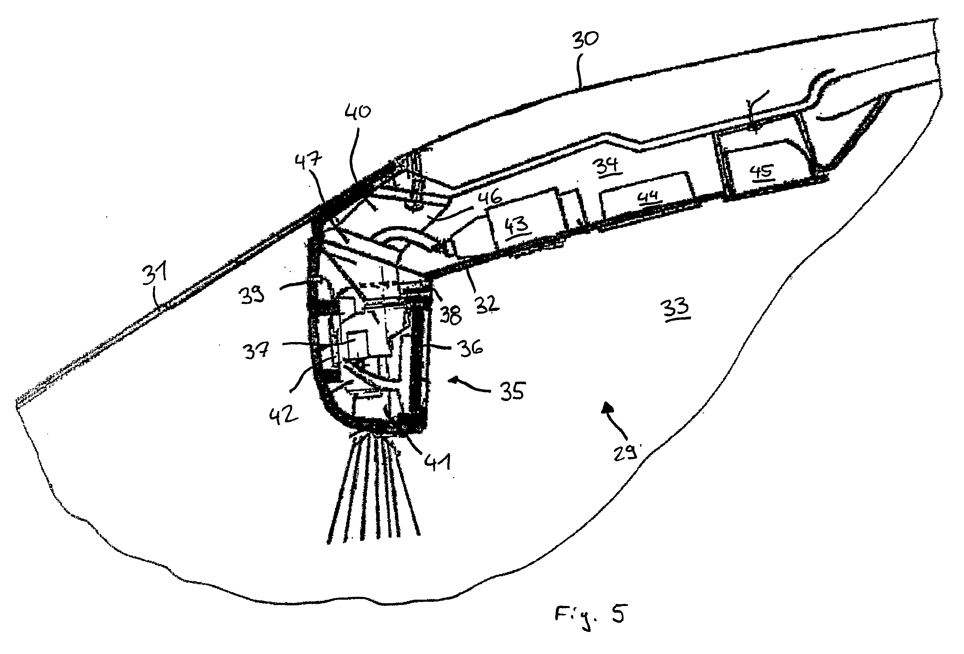

In **Fig. 5** ist eine weitere Ausführungsform 29 eines erfindungsgemäßen Abdeckmoduls dargestellt, die an der Dachinnenseite des Fahrzeugdachs 30 befestigt ist und dabei auch den Übergang zwischen Windschutzscheibe 31 und Fahrzeugdach 30 teilweise überdeckt. Das Abdeckmodul 29 bildet mit seiner Bauteilwandung 32 einen gegenüber dem Fahrzeuginnenraum 33 abgeschlossenen Hohlraum 34.

In der Position, an der üblicherweise ein Innenrückspiegel im Fahrzeug angeordnet ist, weist das Abdeckmodul 29 eine Ausnehmung 35 auf, in der eine Rückblickeinrichtung 36 angeordnet ist. Die Rückblickeinrichtung 36 weist ein Spiegelelement mit elektrochromatischer Beschichtung auf.

Die Rückblickeinrichtung 36 ist im Abdeckmodul 29 mehrachsig verstellbar gelagert. Zur ferngesteuerten Verstellung der Rückblickeinrichtung 36 ist ein elektrischer Verstellantrieb 37 vorgesehen, von dem in **Fig. 5** nur einer der beiden Stellmotoren dargestellt ist. Durch den Verstellantrieb 37 hat der Fahrer die Möglichkeit durch Bedienung eines im Innenraum angeordneten Bedienelements, das beispielsweise in der Art eines Joysticks ausgebildet sein kann, den Blickwinkel der Rückblickeinrichtung 36 ferngesteuert individuell auf seine Erfordernisse einzustellen.

Oberhalb der Rückblickeinrichtung 36 ist ein Lichtsensor 38 vorgesehen, mit dem die Lichtstärke des auf die Rückblickeinrichtung 36 einfallenden Lichtes gemessen werden kann. Abhängig von der durch den Lichtsensor 38 gemessenen Lichtstärke kann dann die elektrochromatische Beschichtung der Rückblickeinrichtung 36 angesteuert und entsprechend abgeblendet werden.

An der Vorderseite des Abdeckmoduls 29 ist ein weiterer Lichtsensor 39 hinter der Windschutzscheibe 31 angeordnet, so dass auch die Lichtstärke des durch die Windschutzscheibe 31 einfallenden Lichtes gemessen werden kann. Außerdem ist direkt unterhalb der Windschutzscheibe 31 ein Regensensor 40 in die Bauteilwandung 04 des Abdeckmoduls 29 integriert, so dass mittels des Regensensors 40 die auf die Windschutzscheibe 31 auftreffende Regenmenge gemessen werden kann.

An der Unterseite des Abdeckmoduls 29 unterhalb der Ausnehmung 35 ist eine Leseleuchte 41 in das Abdeckmodul 29 integriert, wobei zum Durchtritt des vom Leuchtmittel der Leseleuchte 41 erzeugten Lichts ein Ausschnitt in der Bauteilwandung 32 vorgesehen ist.

An der Vorderseite des Abdeckmoduls 29, geschützt durch die Bauteilwandung 32, ist ein Funkempfänger 42 vorgesehen, der die Ansteuerung von Fahrzeugfunktionen durch Funkübertragung von außerhalb des Fahrzeuges, beispielsweise zur Betätigung der Zentralverriegelung oder bestimmter Beleuchtungsfunktionen, ermöglicht.

Im oberen Bereich des Abdeckmoduls 29 ist im Hohlraum 34 außerdem eine Elektronikbox 43 am Abdeckmodul 29 befestigt. Mit der Elektronikbox 43 können verschiedene Steuer- und Regelfunktionen realisiert werden. Insbesondere kann die Schiebedachsteuerung, die Steuerung der Innenraumbeleuchtung und die Steuerung des Verstellantriebes 37 durch die Elektronikbox 43 gesteuert bzw. geregelt werden.

Außerdem ist in das Abdeckmodul 29 eine Innenraumbeleuchtung 44 und ein Staufach 45, in dem beispielsweise Brillen oder ähnliche Gegenstände aufgenommen werden können, integriert.

Zur Befestigung des Abdeckmoduls 29 am Fahrzeugdach 30 ist auf der Dachinnenseite ein Distanzhalter 46 vorgesehen, an dessen unterem Ende ein Rastelement 47 befestigt ist. Der vordere Rand der Bauteilwandung 32 des Abdeckmoduls 29 wird zwischen Windschutzscheibe 31 und Distanzhalter 46 eingesteckt und in der gewünschten Position durch das Rastelement 19 festgelegt. Anschließend werden mehrere Befestigungsschrauben durch die Bauteilwandung 32 des Abdeckmoduls 29 durchgeschraubt, um dadurch die Lage des Abdeckmoduls 29 dauerhaft zu sichern.

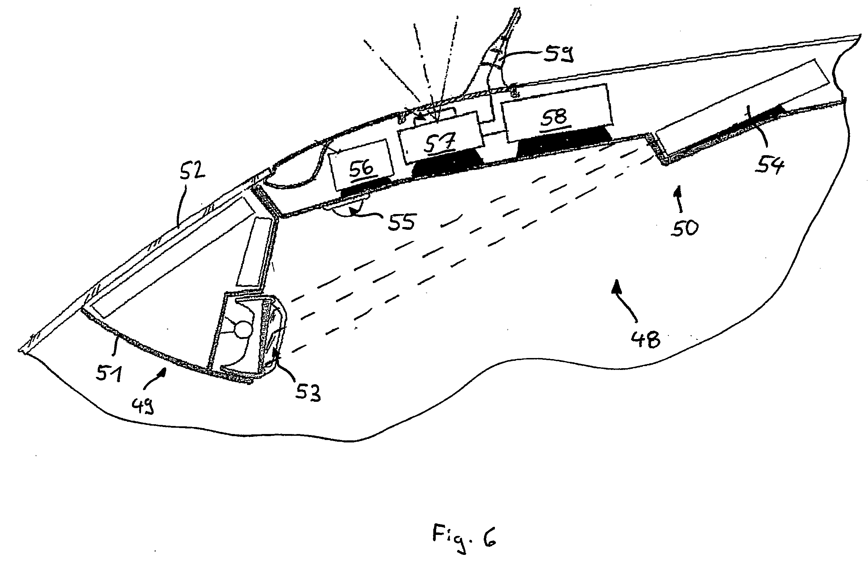

In **Fig. 6** ist eine weitere Ausführungsform 48 eines zweistückig ausgebildeten Abdeckmoduls dargestellt. Das Abdeckmodul 48 wird aus einem vorderen Teilmodul 49 und einem hinteren Teilmodul 50 gebildet. Die Vorderkante der Bauteilwandung 51 des vorderen Teilmoduls 49 schließt direkt an die Windschutzscheibe 52 an, so dass hinter einer Rückblickeinrichtung 53 ein großer Hohlraum gebildet wird. Dadurch wird von dem vorderen Teilmodul 49 ohne weiteres ein Sonnenschutz in der Fahrzeugmitte gebildet, so dass zusätzliche Sonnenblenden oder Abdunklungen der Windschutzscheibe 52 zwischen den seitlichen für den Fahrer bzw. Beifahrer vorgesehenen Sonnenblenden entfallen können. Bei dem Abdeckmodul 48 ist die Rückblickeinrichtung 53 in der Art einer Projektionsfläche ausgebildet, an der die in einer Projektionseinrichtung 54 erzeugten Bilder reflektiert werden. Der Strahlengang der von der Projektionseinrichtung 54 erzeugten Bilder ist in **Fig. 2** schematisch angedeutet. Die von der Projektionseinrichtung 54 erzeugten Bilder werden zuvor von einer Kamera im Bereich des hinteren Fahrzeuges aufgenommen und als Bilddaten an die Projektionseinrichtung 54 übertragen.

Die Länge des hinteren Teilmoduls 50 kann grundsätzlich beliebig gewählt werden und sich beispielsweise bis zum Heckfenster des Fahrzeuges erstrecken. Damit kann insbesondere auch ein ausreichend großer Abstand zwischen der Projektionseinrichtung 54, die in das hintere Teilmodul 50 integriert ist, und der Rückblickeinrichtung 53, die in das vordere Teilmodul 49 integriert ist, realisiert werden. Um die Endmontage des Fahrzeuges weiter zu beschleunigen bzw. zu vereinfachen können die beiden Teilmodule 49 und 50 auch bereits vor der Endmontage miteinander verbunden werden.

In das hintere Teilmodul 50 ist außerdem eine Kamera 55 integriert, mit der weite Bereiche des Fahrzeuginnenraums aufgenommen werden können. Die Kamera 55 wirkt dabei mit einer Speichereinheit 56, die ebenfalls am hinteren Teilmodul 50 befestigt ist, in der Weise zusammen, dass die Aufnahmendaten der Kamera 55 in der Speichereinheit 56 roulierend zwischengespeichert werden.

Weiter ist am hinteren Teilmodul 50 noch ein Antennenträgerelement 57 mit GPS-Antenne und ein Audiosystem 58 befestigt, eine UKW-Antenne 59 über das Antennenträgerelement 57 mit dem Audiosystem 58 verbunden.

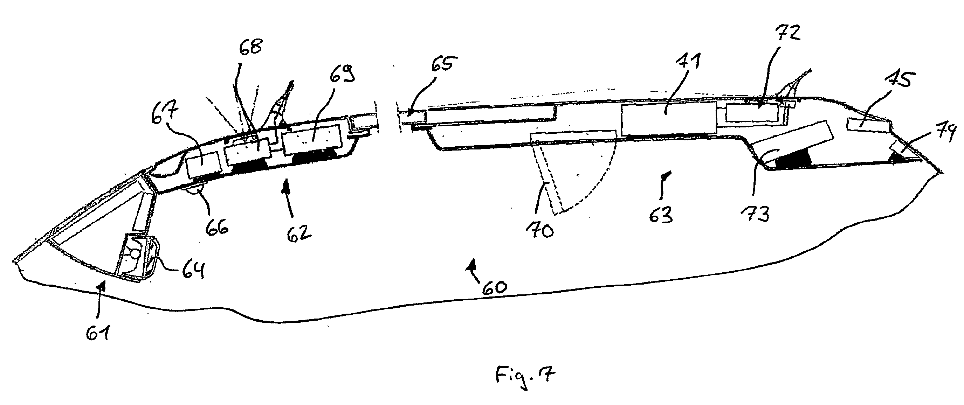

In **Fig. 7** ist eine weitere Ausführungsform 60 eines erfindungsgemäßen Abdeckmoduls dargestellt. Das Abdeckmodul 60 ist aus einem vorderen Teilmodul 61 einem mittleren Teilmodul 62 und einem hinteren Teilmodul 63 zusammengesetzt. Der Aufbau des vorderen Teilmoduls 61 entspricht im Grundsatz dem Aufbau des Teilmoduls 49, weil bei der in **Fig. 7** dargestellten Ausführungsform die Rückblickeinrichtung 64 in der Art eines Spiegelelements ausgebildet ist.

Das mittlere Teilmodul 62, das vor einem Schiebedach 65 im Fahrzeug angeordnet wird, entspricht in seinem Aufbau im Wesentlichen dem Teilmodul 50, wie es in **Fig. 6** dargestellt ist, und weist ebenfalls eine Kamera 66, eine Speichereinheit 67, ein Antennenträgerelement 68 und ein Audiosystem 69 auf. Da die Rückblickeinrichtung 64 in der Art eines Spiegelelements ausgebildet ist, entfällt eine Projektionseinrichtung, wie sie bei der Ausführungsform 48 des Abdeckmoduls vorgesehen ist. Das hintere Teilmodul 63 erstreckt sich von der Rückseite des Schiebedachs 65 bis zur Heckscheibe. In das hintere Teilmodul 63 ist ein Videodisplay 70 integriert, das nach unten ausgeschwenkt werden kann und an dem beispielsweise Computerspiele oder Spielfilme für die auf der Rücksitzbank sitzenden Personen anzeigbar sind. Weiter sind in das hintere Teilmodul 63 ein Audiosystem 71, ein weiteres Antennenträgerelement72 mit Telematiksteuerung und integrierter GPS-Antenne, eine Projektionseinrichtung 73 zur Projizierung von Bilddaten auf die innere Frontscheibe bzw. das Armaturenbrett, eine Zusatzbremsleuchte mit integrierten Abstandssensor 74 und eine Kamera 75 integriert.

## Patentansprüche

1. Abdeckmodul (04, 05, 09, 19, 29, 48, 60) zur Anordnung auf der Dachinnenseite eines Fahrzeuges, wobei das Abdeckmodul (04, 05, 09, 19, 29, 48, 60) die Dachinnenseite im Bereich der Blechkarosserien (02) zumindest teilweise, insbesondere im Wesentlichen vollständig, abdeckt, und wobei am Abdeckmodul (04, 05, 09, 19, 29, 48, 60) alle im Bereich über dem Kopf der Fahrzeuginsassen im Fahrzeug vorzusehenden Funktionselemente fertig vormontiert sind, aufweisend eine Ausnehmung im Bereich vor der Windschutzscheibe, in der eine Rückblickeinrichtung (06, 11, 36, 53, 64) mit einem Spiegelelement angeordnet ist, mit der der Fahrer den nachfolgenden Verkehr beobachten kann,
**dadurch gekennzeichnet,**
**dass** am Abdeckmodul (04, 05, 09, 19, 29, 48, 60) zumindest ein Kontaktierungselement, beispielsweise eine Steckerleiste, vorgesehen ist, durch dessen Kontaktierung mehrere Funktionselemente des Abdeckmoduls (04, 05, 09, 19, 29, 48, 60) über ein an der Dachinnenseite angeordnetes, funktionskomplementär ausgebildetes Kontaktierungselement mit dem elektrischen Bordnetz und/oder dem elektronischen Datenbus des Fahrzeuges kontaktierbar sind, wobei das Kontaktierungselement derart gestaltet und angeordnet ist, dass es durch Befestigung des Abdeckmoduls (04, 05, 09, 19, 29, 48, 60) auf der Dachinnenseite mit dem funktionskomplementär ausgebildeten Kontaktierungselement kontaktiert wird, wobei weiterhin das Abdeckmodul (48, 60) ein Antennenträgerelement (57, 68) aufweist, wobei die Oberfläche des Antennenträgerelements im Wesentlichen bündig mit der Oberseite des Dachs abschließt, und wobei an der der Oberfläche des Antennenträgerelements (57, 68) gegenüberliegenden Unterseite des Antennenträgerelements eine Antenne als Funktionselement direkt oder indirekt angeordnet ist,
wobei weiterhin im Abdeckmodul (19, 48, 60) ein optischer und/oder ein akustischer Sensor (22, 23, 55, 66) als Funktionselement vorgesehen ist, mit dem Videodaten und/oder Audiodaten in der Fahrgastzelle (25) erfassbar sind.

2. Abdeckmodul nach Anspruch 1,
**dadurch gekennzeichnet,**
**dass** durch die Kontaktierung alle Funktionselemente kontaktierbar sind.

3. Abdeckmodul nach Anspruch 1 oder 2,
**dadurch gekennzeichnet,**
**dass** das elektrische Bordnetz des Fahrzeuges eine Versorgungsspannung von circa 42 Volt aufweist.

4. Abdeckmodul nach einem der Ansprüche 1 bis 3,
**dadurch gekennzeichnet,**
**dass** das Abdeckmodul (04, 05, 09, 19, 29, 48, 60) mit einer einfachen Fügebewegung auf der Dachinnenseite verrastet oder eingeclipst werden kann.

5. Abdeckmodul nach einem der vorangehenden Ansprüche,
**dadurch gekennzeichnet,**
**dass** das Abdeckmodul (04, 05, 09, 19, 29, 48, 60) großflächige Aussparungen und/oder Einbuchtungen aufweist, in denen transparente Bauteile, insbesondere Glasplatten (03), angeordnet sind und einen Teil des Fahrzeugdaches bilden.

6. Abdeckmodul nach Anspruch 5,
**dadurch gekennzeichnet,**
**dass** die Glasplatten elektrochromatische Eigenschaften aufweisen.

7. Abdeckmodul nach einem der vorangehenden Ansprüche,
**dadurch gekennzeichnet,**
**dass** das Abdeckmodul aus mehreren Teilmodulen (04, 05, 49, 50, 61, 62, 63) zusammengesetzt ist.

8. Abdeckmodul nach Anspruch 7,
**dadurch gekennzeichnet,**
**dass** das eine Teilmodul (04, 49, 61) des mehrteilig ausgebildeten Abdeckmoduls zur Front des Fahrzeug weisend montiert ist und der andere Teilmodul (05, 50, 63) des mehrteilig ausgebildeten Abdeckmoduls zum Heck des Fahrzeug weisend montiert ist.

9. Abdeckmodul nach einem der vorangehenden Ansprüche,
**dadurch gekennzeichnet,**
**dass** das Spiegelelement (11, 36) zur Verstellung des Blickwinkels mit einer Antriebeinrichtung (37) ferngesteuert antreibbar ist.

10. Abdeckmodul nach Anspruch 9,
**dadurch gekennzeichnet,**
**dass** das Spiegelelement (36) eine Memory-Funktion aufweist, so dass abhängig vom jeweiligen Fahrer entsprechend gespeicherte Einstellungen des Spiegelelements automatisch anfahrbar sind.

11. Abdeckmodul nach einem der vorangehenden Ansprüche,
**dadurch gekennzeichnet,**
**dass** das Spiegelelement (36) in der Art eines Prismenglases mit zwei Reflektionsflächen ausgebildet ist, wobei das Abblenden des Spiegelelements durch ferngesteuerte Antrieb des Prismenglases erfolgt.

12. Abdeckmodul nach einem der vorangehenden Ansprüche,
**dadurch gekennzeichnet,**
**dass** am Spiegelelement eine elektrochromatisches Abblendsystem zur Veränderung der Transmissionseigenschaften vorgesehen ist.

13. Abdeckmodul nach einem der vorangehenden Ansprüche,
**dadurch gekennzeichnet,**
**dass** das Spiegelelement coloriert ist.

14. Abdeckmodul nach einem der vorangehenden Ansprüche,
**dadurch gekennzeichnet,**
**dass** die Rückblickeinrichtung in der Art eines elektronischen Displays ausgebildet ist, an dem elektronische Bilddaten anzeigbar sind.

15. Abdeckmodul nach Anspruch 14,
**dadurch gekennzeichnet,**
**dass** das Display in der Art eines TFT-Bildschirms ausgebildet ist.

16. Abdeckmodul nach einem der vorangehenden Ansprüche,
**dadurch gekennzeichnet,**
**dass** die Rückblickeinrichtung (53) eine Projektionsfläche aufweist, an der von einer Projektionseinrichtung (54) abgestrahlte Bilder reflektiert werden können.

17. Abdeckmodul nach Anspruch 16,
**dadurch gekennzeichnet,**
**dass** die Projektionseinrichtung (54) in das Abdeckmodul (48) integriert ist.

18. Abdeckmodul nach einem der vorangehenden Ansprüche,
**dadurch gekennzeichnet,**
**dass** am Abdeckmodul (04, 09) eine linke und/oder eine rechte Sonnenblende (07, 13, 14) verstellbar gelagert sind, die zwischen eine Ruhestellung und einer Sonnenschutzstellung verstellt werden können.

19. Abdeckmodul nach Anspruch 18,
**dadurch gekennzeichnet,**
**dass** die Sonnenblenden (07, 13, 14) zwischen Ruhestellung und Sonnenschutzstellung rotatorisch verschwenkt werden können.

20. Abdeckmodul nach Anspruch 18,
**dadurch gekennzeichnet,**
**dass** die Sonnenblenden zwischen Ruhestellung und Sonnenschutzstellung linear aus- und eingefahren werden können.

21. Abdeckmoduls nach einem der Ansprüche 18 bis 20,
**dadurch gekennzeichnet,**
**dass** zur Verstellung der Sonnenblenden (13, 14) zumindest eine Antriebseinrichtung (17, 18) vorgesehen ist.

22. Abdeckmodul nach einem der Ansprüche 18 bis 21,
**dadurch gekennzeichnet,**
**dass** an den Sonnenblenden verstellbar gelagerte Zusatzblenden vorgesehen sind.

23. Abdeckmodul nach Anspruch 22,
**dadurch gekennzeichnet,**
**dass** die Zusatzblenden schwenkbar oder ausziehbar an den Sonnenblenden gelagert sind.

24. Abdeckmodul nach Anspruch 22 oder 23,
**dadurch gekennzeichnet,**
**dass** die Zusatzblenden transparent und farbig getönt ausgebildet sind.

25. Abdeckmodul nach einem der vorangehenden Ansprüche,
**dadurch gekennzeichnet,**
**dass** der akustische Sensor (22, 23, 55, 66)ein Mikrophon ist.

26. Abdeckmodul nach einem der vorangehenden Ansprüche,
**dadurch gekennzeichnet,**
**dass** der optische Sensor (22) in der Art einer Videokamera, insbesondere mit CCD-Chip, ausgebildet ist.

27. Abdeckmodul nach einem der vorangehenden Ansprüche,
**dadurch gekennzeichnet,**
**dass** am optischen Sensor (22) ein Weitwinkelobjektiv (26) angeordnet ist.

28. Abdeckmodul nach einem der vorangehenden Ansprüche,
**dadurch gekennzeichnet,**
**dass** mit dem optischen Sensor (22) das Gesichtsfeld des Fahrers aufgenommen werden kann.

29. Abdeckmodul nach einem der vorangehenden Ansprüche,
**dadurch gekennzeichnet,**
**dass** mit dem optischen Sensor (22) Personen auf der Rücksitzbank zumindest bereichsweise aufgenommen werden können.

30. Abdeckmodul nach einem der vorangehenden Ansprüche,
**dadurch gekennzeichnet,**
**dass** der optischen Sensor (22) zur Ansteuerung einer Kindersitzerkennung geeignet ist.

31. Abdeckmodul nach einem der vorangehenden Ansprüche,
**dadurch gekennzeichnet,**
**dass** die vom Sensor (22) aufgenommenen Daten in einer Speichereinheit (24) roulierend zwischengespeichert und gelöscht werden.

32. Abdeckmodul nach Anspruch 31,
**dadurch gekennzeichnet,**
**dass** die Daten der jeweils letzten 5 bis 60 Sekunden in der Speichereinheit zwischengespeichert werden.

33. Abdeckmodul nach Anspruch 31 oder 32,
**dadurch gekennzeichnet,**
**dass** bei Eintreten eines vordefinierten Ereignisses, beispielsweise eines Unfalls, die Datenaufzeichnung beendet und die in der Speichereinheit (24) zwischengespeicherten Daten gesichert werden.

34. Abdeckmodul nach einem der vorangehenden Ansprüche,
**dadurch gekennzeichnet,**
**dass** die vom Sensor (22) aufgenommenen Daten in einer Speichereinheit (24) gespeichert werden können, wobei die Speichereinheit in der Art eines Fahrtenschreibers ausgebildet ist, in dem die Daten auf einem separaten Datenträger blockweise gespeichert werden.

35. Abdeckmodul nach einem der vorangehenden Ansprüche,
**dadurch gekennzeichnet,**
**dass** die Antenne eine GPS-Antenne ist.

36. Abdeckmodul nach Anspruch 35,
**dadurch gekennzeichnet,**
**dass** die GPS-Antenne mit einer Telematik-Steuereinheit integral verbunden ist.

37. Abdeckmodul nach einem der vorangehenden Ansprüche,
**dadurch gekennzeichnet,**
**dass** die Antenne eine UKW-Antenne (59) ist.

38. Abdeckmodul nach einem der vorangehenden Ansprüche,
**dadurch gekennzeichnet,**
**dass** die Antenne eine Funk-Antenne ist.

39. Abdeckmodul nach einem der vorangehenden Ansprüche,
**dadurch gekennzeichnet,**
**dass** die Antenne mit dem Antennenträgerelement integral verbunden ist.

40. Abdeckmodul nach einem der vorangehenden Ansprüche,
**dadurch gekennzeichnet,**
**dass** die Antenne vom Material des Antennenträgerelements umspritzt ist.

41. Abdeckmoduls nach einem der vorangehenden Ansprüche,
**dadurch gekennzeichnet,**
**dass** die Antenne eine Ringkörperantenne ist.

42. Abdeckmodul nach einem der vorangehenden Ansprüche,
**dadurch gekennzeichnet,**
**dass** das Antennenträgerelement (57, 68) aus einem für elektromagnetische Wellen durchlässigen Material besteht.

43. Abdeckmodul nach einem der vorangehenden Ansprüche,
**dadurch gekennzeichnet,**
**dass** das Antennenträgerelement (57, 68) aus Kunststoff besteht.

44. Abdeckmodul nach einem der vorangehenden Ansprüche,
**dadurch gekennzeichnet,**
**dass** das Antennenträgerelement aus Glas besteht.

45. Abdeckmodul nach einem der vorangehenden Ansprüche,
**dadurch gekennzeichnet,**
**dass** das Antennenträgerelement mindestens ein Hakenteil aufweist, das im montierten Zustand des Antennenträgerelements das Dach mit Hinterschnitt umgreift.

46. Abdeckmodul nach einem der vorangehenden Ansprüche,
**dadurch gekennzeichnet,**
**dass** das Antennenträgerelement mit dem Dach verklebt ist.

47. Abdeckmodul nach einem der vorangehenden Ansprüche,
**dadurch gekennzeichnet,**
**dass** das Antennenträgerelement einen Fortsatz aufweist, in dem ein Antennenkabel angeordnet ist.

48. Abdeckmodul nach einem der vorangehenden Ansprüche,
**dadurch gekennzeichnet,**
**dass** im Bereich der Oberfläche des Antennenträgerelements zumindest eine Solarzelle als Funktionselement angeordnet ist.

49. Abdeckmodul nach Anspruch 48,
**dadurch gekennzeichnet,**
**dass** die Solarzelle integral im Antennenträgerelement angeordnet ist.

50. Abdeckmodul nach einem der vorangehenden Ansprüche,
**dadurch gekennzeichnet,**
**dass** am oder im Antennenträgerelement mindestens ein Sensor angeordnet ist.

51. Abdeckmodul nach Anspruch 50,
**dadurch gekennzeichnet,**
**dass** der Sensor ein Temperatursensor ist.

52. Abdeckmodul nach einem der vorangehenden Ansprüche,
**dadurch gekennzeichnet,**
**dass** das Antennenträgerelement mit der Farbe des Dachs lackiert ist.

53. Abdeckmodul nach einem der vorangehenden Ansprüche,
**dadurch gekennzeichnet,**
**dass** das Antennenträgerelement aus einem Material, insbesondere Kunststoff hergestellt ist, das die Farbe des Fahrzeugteils aufweist.

54. Abdeckmodul nach einem der vorangehenden Ansprüche,
**dadurch gekennzeichnet,**
**dass** in das Abdeckmodul zumindest eine Beleuchtungseinrichtung als Funktionselement zur Beleuchtung des Innenraumes integriert ist.

55. Abdeckmodul nach einem der vorangehenden Ansprüche,
**dadurch gekennzeichnet,**
**dass** in das Abdeckmodul (29) ein Funkempfänger (42), insbesondere zur Ansteuerung der Zentralverriegelung und/oder einer Innenbeleuchtungsschaltung, als Funktionselement integriert ist.

56. Abdeckmodul nach einem der vorangehenden Ansprüche,
**dadurch gekennzeichnet,**
**dass** in das Abdeckmodul (29) ein Regensensor (40) und/oder ein Lichtsensor (38, 39) als Funktionselement integriert ist.

57. Abdeckmodul nach einem der vorangehenden Ansprüche,
**dadurch gekennzeichnet,**
**dass** in das Abdeckmodul (29) zumindest ein Staufach (45) als Funktionselement integriert ist.

58. Abdeckmodul nach einem der vorangehenden Ansprüche,
**dadurch gekennzeichnet,**
**dass** in das Abdeckmodul hinter einer Scheibe des Fahrzeuges ein Bremslicht (74) und/oder ein Blinklicht und/oder ein Suchscheinwerfer als Funktionselement integriert ist.

59. Abdeckmodul nach einem der vorangehenden Ansprüche,
**dadurch gekennzeichnet,**
**dass** in das Abdeckmodul zumindest ein Lautsprecher als Funktionselement integriert ist.

60. Abdeckmodul nach einem der vorangehenden Ansprüche,
**dadurch gekennzeichnet,**
**dass** in das Abdeckmodul eine Diebstahlwarnanlage als Funktionselement integriert ist.

61. Abdeckmodul nach einem der vorangehenden Ansprüche,
**dadurch gekennzeichnet,**
**dass** in das Abdeckmodul (09) ein Multifunktionsdisplay (12) als Funktionselement integriert ist.

62. Abdeckmodul nach einem der vorangehenden Ansprüche,
**dadurch gekennzeichnet,**
**dass** in das Abdeckmodul eine Schiebedachsteuerung als Funktionselement integriert ist.

63. Abdeckmodul nach einem der vorangehenden Ansprüche,
**dadurch gekennzeichnet,**
**dass** in das Abdeckmodul ein Betätigungselement zur Fernverstellung des Innen- und/oder Außenrückspiegels als Funktionselement integriert ist.

64. Abdeckmodul nach einem der vorangehenden Ansprüche,
**dadurch gekennzeichnet,**
**dass** in das Abdeckmodul ein, insbesondere schwenkbar gelagertes, Videodisplay (70) als Funktionselement integriert ist, an dem Unterhaltungsdaten anzeigbar sind.

65. Abdeckmodul nach Anspruch 64,
**dadurch gekennzeichnet,**
**dass** das Videodisplay (70) in der Art eines TFT-Bildschirms ausgebildet ist.

66. Abdeckmodul nach Anspruch 64 oder 65,
**dadurch gekennzeichnet,**
**dass** das Videodisplay (70) oberhalb der Rücksitze im Blickfeld der dort sitzenden Passagiere angeordnet ist.

67. Abdeckmodul nach einem der vorangehenden Ansprüche,
**dadurch gekennzeichnet,**
**dass** in das Abdeckmodul eine Medienkonsole, insbesondere ein DVD-Player, als Funktionselement integriert ist.

68. Abdeckmodul nach einem der vorangehenden Ansprüche,
**dadurch gekennzeichnet,**
**dass** in das Abdeckmodul ein Kommunikationsgerät, insbesondere ein Funktelefon, als Funktionselement integriert ist.

69. Abdeckmodul nach einem der vorangehenden Ansprüche,
**dadurch gekennzeichnet,**
**dass** in das Abdeckmodul zumindest ein Sensor (74) zur Messung des Abstandes zu vorfahrenden und/oder nachfolgenden Fahrzeugen als Funktionselement integriert ist.

## Claims

1. Cover module (04, 05, 09, 19, 29, 48, 60) for arrangement on the inside of the roof of a vehicle, the cover module (04, 05, 09, 19, 29, 48, 60) at least partly, in particular substantially completely, covering the inside of the roof in the region of the sheet metal bodywork (02), and all the functional elements to be provided in the region above the head of the passengers in the vehicle being ready pre-mounted on the cover module (04, 05, 09, 19, 29, 48, 60), having a cut-out in the region in front of the windscreen, in which there is arranged a rear view device (06, 11, 36, 53, 64) with a mirror element, with which the driver is able to observe the following traffic,
**characterized in that**
on the cover module (04, 05, 09, 19, 29, 48, 60) there is provided at least one contact-making element, for example a connector strip, by means of contacting which it is possible for a plurality of functional elements of the cover module (04, 05, 09, 19, 29, 48, 60) to make contact with the electrical wiring system and/or the electronic data bus of the vehicle via a functionally complementary contact-making element arranged on the inside of the roof, wherein the contact-making element is configured and arranged in such a way that contact is made with the functionally complementary contact-making element by fixing the cover module (04, 05, 09, 19, 29, 48, 60) to the inside of the roof,
wherein the cover module (48, 60) also has an antenna supporting element (57, 68), wherein the surface of the antenna supporting element terminates substantially flush with the upper side of the roof, and wherein an antenna is arranged directly or indirectly on the lower side of the antenna supporting element, located opposite the surface of the antenna supporting element (57, 68), as a functional element, wherein an optical and/or an acoustic sensor (22, 23, 55, 66) is also provided in the cover module (19, 48, 60) as a functional element, with which video data and/or audio data in the passenger compartment (25) can be acquired.

2. Cover module according to Claim 1,
**characterized in that**
contact can be made with all the functional elements as a result of making the contact.

3. Cover module according to Claim 1 or 2,
**characterized in that**
the electrical wiring system of the vehicle has a supply voltage of about 42 volt.

4. Cover module according to one of Claims 1 to 3,
**characterized in that**
the cover module (04, 05, 09, 19, 29, 48, 60) can be latched or clipped in on the inside of the roof by a simple joining movement.

5. Cover module according to one of the preceding claims,
**characterized in that**
the cover module (04, 05, 09, 19, 29, 48, 60) has large-area cut-outs and/or indentations, in which transparent components, in particular glass plates (03), are arranged and form a part of the vehicle roof.

6. Cover module according to Claim 5,
**characterized in that**
the glass plates have electrochromatic properties.

7. Cover module according to one of the preceding claims,
**characterized in that**
the cover module is assembled from a plurality of partial modules (04, 05, 49, 50, 61, 62, 63).

8. Cover module according to Claim 7,
**characterized in that**
one partial module (04, 49, 61) of the multi-part cover module is mounted so as to point towards the front of the vehicle, and the other partial module (05, 50, 63) of the multi-part cover module is mounted so as to point towards the rear of the vehicle.

9. Cover module according to one of the preceding claims,
**characterized in that**
the mirror element (11, 36) can be driven under remote control by a drive device (37) in order to adjust the viewing angle.

10. Cover module according to Claim 9,
**characterized in that**
the mirror element (36) has a memory function, so that, depending on the respective driver, it is possible to move automatically to appropriately stored settings of the mirror element.

11. Cover module according to one of the preceding claims,
**characterized in that**
the mirror element (36) is formed in the manner of a prismatic glass having two reflection surfaces, the mirror element being dipped by means of remote-controlled driving of the prismatic glass.

12. Cover module according to one of the preceding claims,
**characterized in that**
an electrochromatic dipping system is provided on the mirror element in order to change the transmission properties.

13. Cover module according to one of the preceding claims,
**characterized in that**
the mirror element is coloured.

14. Cover module according to one of the preceding claims,
**characterized in that**
the rear view device is formed in the manner of an electronic display, on which electronic image data can be displayed.

15. Cover module according to Claim 14,
**characterized in that**
the display is formed in the manner of a TFT monitor.

16. Cover module according to one of the preceding claims,
**characterized in that**
the rear view device (53) has a projection area, on which images emitted by a projection device (54) can be reflected.

17. Cover module according to Claim 16,
**characterized in that**
the projection device (54) is integrated into the cover module (48).

18. Cover module according to one of the preceding claims,
**characterized in that**
adjustably mounted on the cover module (04, 09) is a left-hand and/or a right-hand sun visor (07, 13, 14), which can be adjusted between a rest position and a sun protection position.

19. Cover module according to Claim 18,
**characterized in that**
the sun visors (07, 13, 14) can be pivoted rotationally between rest position and sun protection position.

20. Cover module according to Claim 18,
**characterized in that**
the sun visors can be moved in and out linearly between rest position and sun protection position.

21. Cover module according to one of Claims 18 to 20,
**characterized in that**
in order to adjust the sun visors (13, 14), at least one drive device (17, 18) is provided.

22. Cover module according to one of Claims 18 to 21,
**characterized in that**
additional visors adjustably mounted on the sun visors are provided.

23. Cover module according to Claim 22,
**characterized in that**
the additional visors are mounted on the sun visors such that they can be pivoted or pulled out.

24. Cover module according to Claim 22 or 23,
**characterized in that**
the additional visors are designed to be transparent and colour-tinted.

25. Cover module according to one of the preceding claims,
**characterized in that**
the acoustic sensor (22, 23, 55, 66) is a microphone.

26. Cover module according to one of the preceding claims,
**characterized in that**
the optical sensor (22) is formed in the manner of a video camera, in particular with a CCD chip.

27. Cover module according to one of the preceding claims,
**characterized in that**
a wide angle lens (26) is arranged on the optical sensor (22).

28. Cover module according to one of the preceding claims,
**characterized in that**
the field of view of the driver can be recorded by the optical sensor (22).

29. Cover module according to one of the preceding claims,
**characterized in that**
individuals on the rear seat, at least in some areas, can be recorded by the optical sensor (22).

30. Cover module according to one of the preceding claims,
**characterized in that**
the optical sensor (22) is suitable for activating child seat recognition.

31. Cover module according to one of the preceding claims,
**characterized in that**
the data recorded by the sensor (22) can be stored temporarily and erased in a rolling manner in a memory unit (24).

32. Cover module according to Claim 31,
**characterized in that**
the data from the respective last 5 to 60 seconds are stored temporarily in the memory unit.

33. Cover module according to Claim 31 or 32,
**characterized in that**
upon the occurrence of a predefined event, for example an accident, the data recording is ended and the data stored temporarily in the memory unit (24) are secured.

34. Cover module according to one of the preceding claims,
**characterized in that**
the data recorded by the sensor (22) can be stored in a memory unit (24), wherein the memory unit is formed in the manner of a tachograph, in which the data are stored block by block on a separate data carrier.

35. Cover module according to one of the preceding claims,
**characterized in that**
the antenna is a GPS antenna.

36. Cover module according to Claim 35,
**characterized in that**
the GPS antenna is integrally connected to a telematics control unit.

37. Cover module according to one of the preceding claims,
**characterized in that**
the antenna is a VHF antenna (59).

38. Cover module according to one of the preceding claims,
**characterized in that**
the antenna is a radio antenna.

39. Cover module according to one of the preceding claims,
**characterized in that**
the antenna is integrally connected to the antenna supporting element.

40. Cover module according to one of the preceding claims,
**characterized in that**
the antenna is encapsulated in the material of the antenna supporting element.

41. Cover module according to one of the preceding claims,
**characterized in that**
the antenna is a ring-element antenna.

42. Cover module according to one of the preceding claims,
**characterized in that**
the antenna supporting element (57, 68) consists of a material that is transparent to electromagnetic waves.

43. Cover module according to one of the preceding claims,
**characterized in that**
the antenna supporting element (57, 68) consists of plastic.

44. Cover module according to one of the preceding claims,
**characterized in that**
the antenna supporting element consists of glass.

45. Cover module according to one of the preceding claims,
**characterized in that**
the antenna supporting element has at least one hook part which, in the mounted state of the antenna supporting element, engages around the roof with an undercut.

46. Cover module according to one of the preceding claims,
**characterized in that**
the antenna supporting element is adhesively bonded to the roof.

47. Cover module according to one of the preceding claims,
**characterized in that**
the antenna supporting element has an extension in which an antenna cable is arranged.

48. Cover module according to one of the preceding claims,
**characterized in that**
at least one solar cell is arranged in the region of the surface of the antenna supporting element as a functional element.

49. Cover module according to Claim 48,
**characterized in that**
the solar cell is arranged integrally in the antenna supporting element.

50. Cover module according to one of the preceding claims,
**characterized in that**
at least one sensor is arranged on or in the antenna supporting element.

51. Cover module according to Claim 50,
**characterized in that**
the sensor is a temperature sensor.

52. Cover module according to one of the preceding claims,
**characterized in that**
the antenna supporting element is painted with the colour of the roof.

53. Cover module according to one of the preceding claims,
**characterized in that**
the antenna supporting element is produced from a material, in particular plastic, which has the colour of the vehicle part.

54. Cover module according to one of the preceding claims,
**characterized in that**
at least one lighting device is integrated into the cover module as a functional element for lighting the interior.

55. Cover module according to one of the preceding claims,
**characterized in that**
a radio receiver (42) is integrated into the cover module (29) as a functional element, in particular for activating the central locking and/or internal lighting switching.

56. Cover module according to one of the preceding claims,
**characterized in that**
a rain sensor (40) and/or a light sensor (38, 39) is/are integrated into the cover module (29) as a functional element.

57. Cover module according to one of the preceding claims,
**characterized in that**
at least one storage compartment (45) is integrated into the cover module (29) as a functional element.

58. Cover module according to one of the preceding claims,
**characterized in that**
a brake light (74) and/or an indicator light and/or a spotlight is/are integrated into the cover module as a functional element.

59. Cover module according to one of the preceding claims,
**characterized in that**
at least one loudspeaker is integrated into the cover module as a functional element.

60. Cover module according to one of the preceding claims,
**characterized in that**
an anti-theft alarm system is integrated into the cover module as a functional element.

61. Cover module according to one of the preceding claims,
**characterized in that**
a multifunctional display (12) is integrated into the cover module (09) as a functional element.

62. Cover module according to one of the preceding claims,
**characterized in that**
a sliding roof control system is integrated into the cover module as a functional element.

63. Cover module according to one of the preceding claims,
**characterized in that**
an actuating element for the remote adjustment of the interior and/or exterior rear view mirror is integrated into the cover module as a functional element.

64. Cover module according to one of the preceding claims,
**characterized in that**
a video display (70), in particular a pivotably mounted video display, on which entertainment data can be displayed, is integrated into the cover module as a functional element.

65. Cover module according to Claim 64,
**characterized in that**
the video display (70) is formed in the manner of a TFT monitor.

66. Cover module according to Claim 64 or 65,
**characterized in that**
the video display (70) is arranged above the rear seats in the field of view of the passengers sitting there.

67. Cover module according to one of the preceding claims,
**characterized in that**
a media console, in particular a DVD player, is integrated into the cover module as a functional element.

68. Cover module according to one of the preceding claims,
**characterized in that**
a communications device, in particular a radiotelephone, is integrated into the cover module as a functional element.

69. Cover module according to one of the preceding claims,
**characterized in that**
at least one sensor (74) for measuring the distance to the vehicles travelling in front and/or following vehicles is integrated into the cover module as a functional element.

## Revendications

1. Module de couverture (04, 05, 09, 19, 29, 48, 60) à disposer sur la face intérieure d'un véhicule, dans lequel le module de couverture (04, 05, 09, 19, 29, 48, 60) la face intérieure dans la zone de la tôle de carrosserie (02) recouvre au moins partiellement, notamment sensiblement entièrement, et dans lequel tous les éléments fonctionnels à prévoir dans la zone située au-dessus de la tête des occupants du véhicule sont préassemblés dans le véhicule sur ledit module de couverture (04, 05, 09, 19, 29, 48, 60), comprenant une cavité dans la zone située à l'avant du pare-brise, dans lequel est disposé un dispositif de rétrovision (06, 11, 36, 53, 64) comportant un élément miroir au moyen duquel le conducteur peut observer la circulation qui le suit,
**caractérisé en ce qu'**il est prévu, sur ledit module de couverture (04, 05, 09, 19, 29, 48, 60), au moins un élément de mise en contact, par exemple un bornier, ladite mise en contact permettant de mettre en contact plusieurs éléments fonctionnels du module de couverture (04, 05, 09, 19, 29, 48, 60) par l'intermédiaire d'un élément de mise en contact disposé sur la face intérieure, réalisé de manière fonctionnellement complémentaire avec le réseau électrique de bord et/ou le bus de données électronique du véhicule, dans lequel l'élément de mise en contact est conçu et agencé de manière à ce qu'il vienne au contact de l'élément de mise en contact réalisé de manière fonctionnellement complémentaire par fixation du module de couverture (04, 05, 09, 19, 29, 48, 60) sur la face intérieure,
dans lequel le module de couverture (48, 60) comprend en outre un élément de support d'antenne (57, 68), dans lequel la surface de l'élément de support d'antenne affleure sensiblement à la face supérieure du pavillon, et dans lequel une antenne est disposée directement ou indirectement sur la face intérieure de l'élément de support d'antenne qui est opposée à la surface supérieure de l'élément de support d'antenne (57, 68), en tant qu'élément fonctionnel,
dans lequel il est en outre prévu dans le module de couverture (19, 48, 60) un capteur optique et/ou acoustique (22, 23, 55, 66) en tant qu'élément fonctionnel, au moyen duquel des données vidéo et/ou des données audio peuvent être acquises dans l'habitacle (25).

2. Module de couverture selon la revendication 1,
**caractérisé en ce que** tous les éléments fonctionnels peuvent être mis en contact par la mise en contact.

3. Module de couverture selon la revendication 1 ou 2,
**caractérisé en ce que** le réseau électrique de bord du véhicule comprend une tension d'alimentation d'environ 42 volts.

4. Module de couverture selon l'une quelconque des revendications 1 à 3,
**caractérisé en ce que** le module de couverture (04, 05, 09, 19, 29, 48, 60) peut être encliqueté ou enclipsé au moyen d'un mouvement de repliement simple sur la face intérieure.

5. Module de couverture selon l'une quelconque des revendications précédentes,
**caractérisé en ce que** le module de couverture (04, 05, 09, 19, 29, 48, 60) comprend des évidements et/ou des échancrures de grandes dimensions, dans lesquels des composants transparents, notamment des plaques de verre (03), sont disposés et forment une partie du pavillon du véhicule.

6. Module de couverture selon la revendication 5,
**caractérisé en ce que** les plaques de verre présentent des propriétés électrochromatiques.

7. Module de couverture selon l'une quelconque des revendications précédentes,
**caractérisé en ce que** le module de couverture est constitué de plusieurs sous-modules (04, 05, 49, 50, 61, 62, 63).

8. Module de couverture selon la revendication 7,
**caractérisé en ce que** l'un des sous-modules (04, 49, 61) du module de couverture réalisé en plusieurs parties est monté de manière tournée vers l'avant du véhicule et l'autre sous-module (05, 50, 63) du module de couverture réalisé en plusieurs parties est monté de manière tournée vers l'arrière du véhicule.

9. Module de couverture selon l'une quelconque des revendications précédentes,
**caractérisé en ce que** l'élément miroir (11, 36) peut être entraîné de manière télécommandée pour régler l'angle de vue au moyen d'un dispositif d'entraînement (37).

10. Module de couverture selon la revendication 9,
**caractérisé en ce que** l'élément miroir (36) comprend une fonction mémoire de manière à ce que des réglages de l'élément mémoire, mémorisés de manière correspondante, puissent être mis en oeuvre automatiquement en fonction du conducteur respectif.

11. Module de couverture selon l'une quelconque des revendications précédentes,
**caractérisé en ce que** l'élément miroir (36) est réalisé sous la forme d'un verre prismatique ayant deux surfaces réfléchissantes, dans lequel l'occultation de l'élément mémoire s'effectue par entraînement télécommandé du verre prismatique.

12. Module de couverture selon l'une quelconque des revendications précédentes,
**caractérisé en ce qu'**il est prévu sur l'élément miroir un système d'occultation électrochromatique destiné à modifier les propriétés de transmission.

13. Module de couverture selon l'une quelconque des revendications précédentes,
**caractérisé en ce que** l'élément miroir est coloré.

14. Module de couverture selon l'une quelconque des revendications précédentes,
**caractérisé en ce que** le dispositif de rétrovision est réalisé sous la forme d'un afficheur électronique sur lequel des données d'images électroniques peuvent être affichées.

15. Module de couverture selon la revendication 14,
**caractérisé en ce que** l'afficheur est réalisé sous la forme d'un écran TFT.

16. Module de couverture selon l'une quelconque des revendications précédentes,
**caractérisé en ce que** le dispositif de rétrovision (53) présente une surface de projection sur laquelle peuvent être réfléchies des images rayonnées par un dispositif de projection (54).

17. Module de couverture selon la revendication 16,
**caractérisé en ce que** le dispositif de projection (54) est intégré dans le module de couverture (48).

18. Module de couverture selon l'une quelconque des revendications précédentes,
**caractérisé en ce que** des pare-soleil gauche et/ou droit (07, 13, 14) sont montés de manière réglable sur ledit module de couverture (04, 09) et peuvent être réglés entre une position de repos et une position de protection contre le soleil.

19. Module de couverture selon la revendication 18,
**caractérisé en ce que** les pare-soleil (07, 13, 14) peuvent être pivotés de manière tournante entre la position de repos et la position de protection contre le soleil.

20. Module de couverture selon la revendication 18,
**caractérisé en ce que** les pare-soleil peuvent être déployés et rétractés linéairement entre la position de repos et la position de protection contre le soleil.

21. Module de couverture selon l'une quelconque des revendications 18 à 20,
**caractérisé en ce qu'**il est prévu au moins un dispositif d'entraînement (17, 18) pour régler les pare-soleil (13, 14).

22. Module de couverture selon l'une quelconque des revendications 18 à 21,
**caractérisé en ce qu'**il est prévu sur les pare-soleil des masques supplémentaires montés de manière réglable.

23. Module de couverture selon la revendication 22,
**caractérisé en ce que** les masques supplémentaires sont montés de manière pivotante ou de manière extensible sur les pare-soleil.

24. Module de couverture selon la revendication 22 ou 23,
**caractérisé en ce que** les masques supplémentaires sont réalisés de manière transparente et de manière colorée.

25. Module de couverture selon l'une quelconque des revendications précédentes,
**caractérisé en ce que** le capteur acoustique (22, 23, 55, 66) est un microphone.

26. Module de couverture selon l'une quelconque des revendications précédentes,
**caractérisé en ce que** le capteur optique (22) est réalisé sous la forme d'une caméra vidéo comportant notamment une puce à CCD.

27. Module de couverture selon l'une quelconque des revendications précédentes,
**caractérisé en ce qu'**un objectif grand angle (26) est disposé sur le capteur optique (22).

28. Module de couverture selon l'une quelconque des revendications précédentes,
**caractérisé en ce que** le champ de vue du conducteur peut être détecté au moyen du capteur optique (22).

29. Module de couverture selon l'une quelconque des revendications précédentes,
**caractérisé en ce que** des personnes se trouvant sur la banquette arrière peuvent être détectés au moins par endroits au moyen du capteur optique (22).

30. Module de couverture selon l'une quelconque des revendications précédentes,
**caractérisé en ce que** le capteur optique (22) est approprié pour commander une détection de siège d'enfant.

31. Module de couverture selon l'une quelconque des revendications précédentes,
**caractérisé en ce que** les données acquises par le capteur (22) sont stockées en mémoire tampon et supprimées une à une dans une unité à mémoire (24).

32. Module de couverture selon la revendication 31,
**caractérisé en ce que** les données des 5 à 60 dernières secondes sont respectivement stockées en mémoire tampon dans l'unité à mémoire.

33. Module de couverture selon la revendication 31 ou 32,
**caractérisé en ce que** lorsqu'il se produit un événement prédéfini, par exemple un accident, l'enregistrement de données s'interrompt et les données stockées en mémoire tampon dans l'unité à mémoire (24) sont sauvegardées.

34. Module de couverture selon l'une quelconque des revendications précédentes,
**caractérisé en ce que** les données acquises par le capteur (22) peuvent être mémorisées dans une unité à mémoire (24), dans lequel l'unité à mémoire est réalisée sous la forme d'un tachygraphe dans lequel les données sont mémorisées par blocs sur un support de données séparé.

35. Module de couverture selon l'une quelconque des revendications précédentes,
**caractérisé en ce que** l'antenne est une antenne GPS.

36. Module de couverture selon la revendication 35,
**caractérisé en ce que** l'antenne GPS est reliée de manière solidaire à une unité de commande télématique.

37. Module de couverture selon l'une quelconque des revendications précédentes,
**caractérisé en ce que** l'antenne est une antenne VHF (59).

38. Module de couverture selon l'une quelconque des revendications précédentes,
**caractérisé en ce que** l'antenne est une antenne radio.

39. Module de couverture selon l'une quelconque des revendications précédentes,
**caractérisé en ce que** l'antenne est reliée de manière solidaire à l'élément de support d'antenne.

40. Module de couverture selon l'une quelconque des revendications précédentes,
**caractérisé en ce que** l'antenne est enrobée par le matériau de l'élément de support d'antenne.

41. Module de couverture selon l'une quelconque des revendications précédentes,
**caractérisé en ce que** l'antenne est une antenne annulaire.

42. Module de couverture selon l'une quelconque des revendications précédentes,
**caractérisé en ce que** l'élément de support d'antenne (57, 68) est constitué d'un matériau transparent aux ondes électromagnétiques.

43. Module de couverture selon l'une quelconque des revendications précédentes,
**caractérisé en ce que** l'élément de support d'antenne (57, 68) est constitué de matière plastique.

44. Module de couverture selon l'une quelconque des revendications précédentes,
**caractérisé en ce que** l'élément de support d'antenne est constitué de verre.

45. Module de couverture selon l'une quelconque des revendications précédentes,
**caractérisé en ce que** l'élément de support d'antenne comprend au moins un partie formant crochet qui enserre avec contre-dépouille le pavillon à l'état assemblé de l'élément de support d'antenne.

46. Module de couverture selon l'une quelconque des revendications précédentes,
**caractérisé en ce que** l'élément de support d'antenne est collé au pavillon.

47. Module de couverture selon l'une quelconque des revendications précédentes,
**caractérisé en ce que** l'élément de support d'antenne comprend une protubérance dans laquelle est disposé un câble d'antenne.

48. Module de couverture selon l'une quelconque des revendications précédentes,
**caractérisé en ce qu'**au moins une cellule solaire est disposée dans la zone de la surface supérieure de l'élément de support d'antenne en tant qu'élément fonctionnel.

49. Module de couverture selon la revendication 48,
**caractérisé en ce que** la cellule solaire est disposée de manière solidaire dans l'élément de support d'antenne.

50. Module de couverture selon l'une quelconque des revendications précédentes,
**caractérisé en ce qu'**au moins un capteur est disposé sur ou dans l'élément de support d'antenne.

51. Module de couverture selon la revendication 50,
**caractérisé en ce que** le capteur est un capteur de température.

52. Module de couverture selon l'une quelconque des revendications précédentes,
**caractérisé en ce que** l'élément de support d'antenne est laqué avec la couleur du pavillon.

53. Module de couverture selon l'une quelconque des revendications précédentes,
**caractérisé en ce que** l'élément de support d'antenne est fabriqué à partir d'un matériau, notamment une matière plastique, qui présente la couleur de la partie de véhicule.

54. Module de couverture selon l'une quelconque des revendications précédentes,
**caractérisé en ce qu'**au moins un dispositif d'éclairage est intégré dans le module de couverture en tant qu'élément fonctionnel pour éclairer l'espace intérieur.

55. Module de couverture selon l'une quelconque des revendications précédentes,
**caractérisé en ce qu'**un récepteur radio (42), notamment destiné à commander le verrouillage centralisé et/ou un circuit d'éclairage intérieur, est intégré dans le module de couverture (29) en tant qu'élément fonctionnel.

56. Module de couverture selon l'une quelconque des revendications précédentes,
**caractérisé en ce qu'**un capteur de pluie (40) et/ou un capteur de lumière (38, 39) est intégré dans le module de couverture (29) en tant qu'élément fonctionnel.

57. Module de couverture selon l'une quelconque des revendications précédentes,
**caractérisé en ce qu'**au moins un compartiment de rangement (45) est intégré dans le module de couverture (29) en tant qu'élément fonctionnel.

58. Module de couverture selon l'une quelconque des revendications précédentes,
**caractérisé en ce qu'**un feu de freinage (74) et/ou un clignotant et/ou un projecteur est intégré dans le module de couverture à l'arrière d'une vitre du véhicule en tant qu'élément fonctionnel.

59. Module de couverture selon l'une quelconque des revendications précédentes,
**caractérisé en ce qu'**au moins un haut-parleur est intégré dans le module de couverture en tant qu'élément fonctionnel.

60. Module de couverture selon l'une quelconque des revendications précédentes,
**caractérisé en ce qu'**une alarme de sécurité est intégrée dans le module de couverture en tant qu'élément fonctionnel.

61. Module de couverture selon l'une quelconque des revendications précédentes,
**caractérisé en ce qu'**un afficheur multifonction (12) est intégré dans le module de couverture (09) en tant qu'élément fonctionnel.

62. Module de couverture selon l'une quelconque des revendications précédentes,
**caractérisé en ce qu'**une commande de toit ouvrant est intégrée dans le module de couverture en tant qu'élément fonctionnel.

63. Module de couverture selon l'une quelconque des revendications précédentes,
**caractérisé en ce qu'**un élément d'actionnement destiné à régler à distance le rétroviseur intérieur et/ou extérieur est intégré dans le module de couverture en tant qu'élément fonctionnel.

64. Module de couverture selon l'une quelconque des revendications précédentes,
**caractérisé en ce qu'**un afficheur vidéo (70) est intégré dans le module de couverture, notamment monté de manière pivotante, en tant qu'élément fonctionnel sur lequel des données de divertissement peuvent être affichées.

65. Module de couverture selon la revendication 64,
**caractérisé en ce que** l'afficheur vidéo (70) est réalisé sous la forme d'un écran TFT.

66. Module de couverture selon la revendication 64 ou 65,
**caractérisé en ce que** l'afficheur vidéo (70) est disposé au-dessus des sièges arrière dans le champ de vision des passagers qui y sont assis.

67. Module de couverture selon l'une quelconque des revendications précédentes,
**caractérisé en ce qu'**une console multimédia, notamment un lecteur de DVD, est intégrée dans le module de couverture en tant qu'élément fonctionnel.

68. Module de couverture selon l'une quelconque des revendications précédentes,
**caractérisé en ce qu'**un appareil de communication, notamment un radiotéléphone, est intégré dans le module de couverture en tant qu'élément fonctionnel.

69. Module de couverture selon l'une quelconque des revendications précédentes,
**caractérisé en ce qu'**au moins un capteur (74) destiné à mesurer la distance de véhicules circulant vers l'avant et/ou circulant vers l'arrière, est intégré dans le module de couverture en tant qu'élément fonctionnel.
